# EUROPÄISCHE PATENTANMELDUNG

(11) **EP 0 722 061 A2**
(43) Veröffentlichungstag der Anmeldung: **17.07.1996**
(21) Anmeldenummer: 95115184.4
(22) Anmeldetag: 27.09.1995
(51) Int. Cl.: F16K 31/06

(54) **Elektromagnetventil**

(30) Priorität: 11.01.1995 DE 19500567
(71) Anmelder: ROBERT BOSCH GMBH, 70442 Stuttgart (DE)
(72) Erfinder: Lange, Dietmar, Ing., D-71394 Kernen (DE)

(57) **Zusammenfassung**

Die Erfindung betrifft ein Magnetventil, umfassend einen Spulenkörper, ein Joch und einen innerhalb einer rückspringenden Ausformung des Jochs gegen einen, einen Dichtsitz bildenden Anschlag verschiebbar geführten Anker. Es wird vorgeschlagen, das Magnetventil so auszubilden, daß der Anker (34) mittels eines biegeelastischen Halteelements (38) in einem Abstand von einem die Ausformung (36) des Jochs (32) bildenden Wandbereich (46) gehalten ist.

## Beschreibung

Die Erfindung betrifft ein Magnetventil nach dem Oberbegriff des Anspruchs 1.

### Stand der Technik

Derartige proportional arbeitende Magnetventile sind beispielsweise bei elektropneumatischen Druckwandlern bekannt, mit denen über zwei oder mehrere Dichtsitze bei einem Verbraucher ein bestimmter Unterdruck bereitgestellt und aufrechterhalten werden kann. Dieser Verbraucherunterdruck bewegt sich dabei zwischen einem am ersten Dichtsitz anliegenden Umgebungsdruck und einem an einem weiteren Dichtsitz anliegenden von einer Unterdruck erzeugenden Vorrichtung bereitgestellten Versorgungsdruck. Die auf den Anker ausgeübte Anzugskraft wird durch den innerhalb der Wicklung fließenden Steuerstrom bestimmt, wobei sich ein Gleichgewicht zwischen der magnetischen Anzugskraft und einer gegenüber dem Umgebungsdruck bestehenden Druckdifferenz und etwaiger Federkräfte einstellt.

Magnetventile, bei denen der gegen den Anschlag verschiebbare oder auslenkbare Anker innerhalb einer rückspringenden Ausformung des Jochs geführt ist, weisen den Nachteil auf, daß es aufgrund des magnetischen Flusses innerhalb des Jochs und des Ankers zu Anzugskräften auf den Anker quer zur Stellrichtung des Ankers kommt. Hierdurch ist die Funktionsfähigkeit des Magnetventils gefährdet. Um zu verhindern, daß der Anker innerhalb der Ausformung durch Kontakt mit dem Joch festgelegt wird, könnte der Anker in Form einer kreisförmigen Ankerplatte ausgebildet und innerhalb einer kreisförmigen Kunststoffhülse geführt werden. Hierbei kommt es jedoch zu erheblichen Reibungsverlusten, was wiederum die Funktionsfähigkeit des Magnetventils beziehungsweise des Druckwandlers beeinträchtigt.

### Vorteile der Erfindung

Das erfindungsgemäße Magnetventil mit den im Anspruch 1 genannten Merkmalen bietet demgegenüber den Vorteil, daß der Anker reibungsfrei geführt ist. Hystereseeffekte werden hierdurch auf ein für die Ventilsteuerung unschädliches Maß herabgesetzt. Des weiteren ergibt sich eine gegenüber dem Stand der Technik sehr schmale Todzone im Regelbereich, so daß eine verzögerungsfreie Reaktion des Ankers auf Steuerstromänderungen möglich ist. Ferner ist das erfindungsgemäße Magnetventil auf wirtschaftlichere Weise herstellbar und unterliegt einem geringeren Verschleiß als bekannte Ventile.

Durch eine Beschichtung des Ankers mit einem insbesondere gummielastischen Material auf seiner gegen den Dichtsitz anlegbaren Seite wird ein geräuscharmer Betrieb des Ventils gewährleistet.

Das Halteelement könnte grundsätzlich an einem beliebigen ortsfesten Bauteil montiert sein; im Hinblick auf eine kompakte Bauweise, erweist es sich jedoch als vorteilhaft, wenn das Halteelement und damit der Anker an dem Joch gehalten ist. Das Halteelement ist vorzugsweise rahmenförmig ausgebildet und umgreift die Ankerplatte. Die Ankerplatte und das Halteelement können grundsätzlich durch beliebige Fügeverfahren miteinander verbunden werden; als vorteilhaft und einfach herstellbar hat sich jedoch eine Vernietung erwiesen.

Weitere vorteilhafte Ausgestaltungen der Erfindung ergeben sich aus den weiteren in den Unteransprüchen genannten Merkmalen.

### Zeichnungen

Die Erfindung wird nachfolgend anhand der zeichnerischen Darstellung eines Ausführungsbeispiels näher erläutert. In der Zeichnung zeigt:
- Figur 1: eine Schnittansicht eines erfindungsgemäßen Magnetventils;
- Figur 2: eine Schnittansicht des Magnetventils entlang der Linie 2 - 2 in Figur 1;
- Figur 3: ein Schnittansicht des Ankerbereichs des Ventils;
- Figur 4: eine Ansicht des Ankerbereichs gemäß Figur 3 von unten, und
- Figur 5: eine Ausgangskennlinie eines Magnetventils.

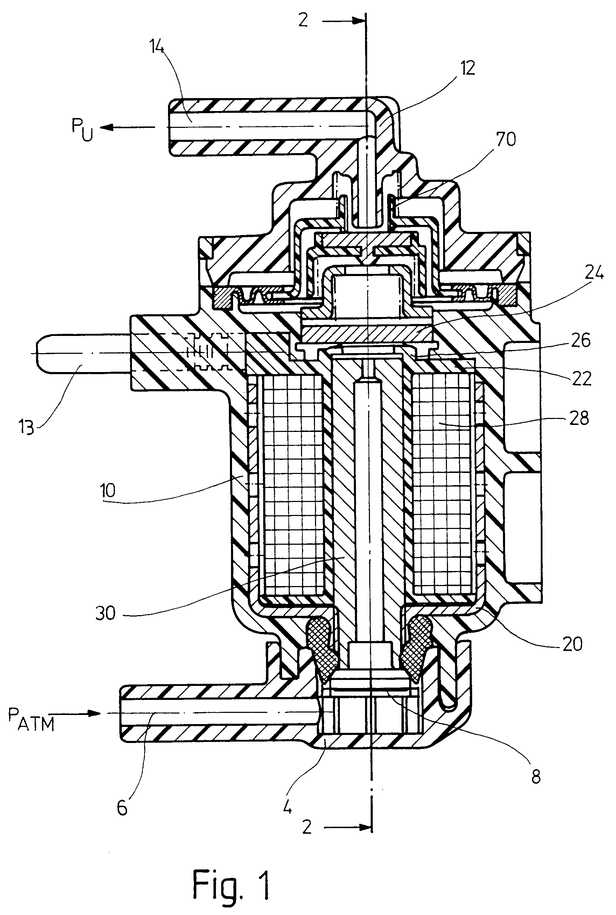

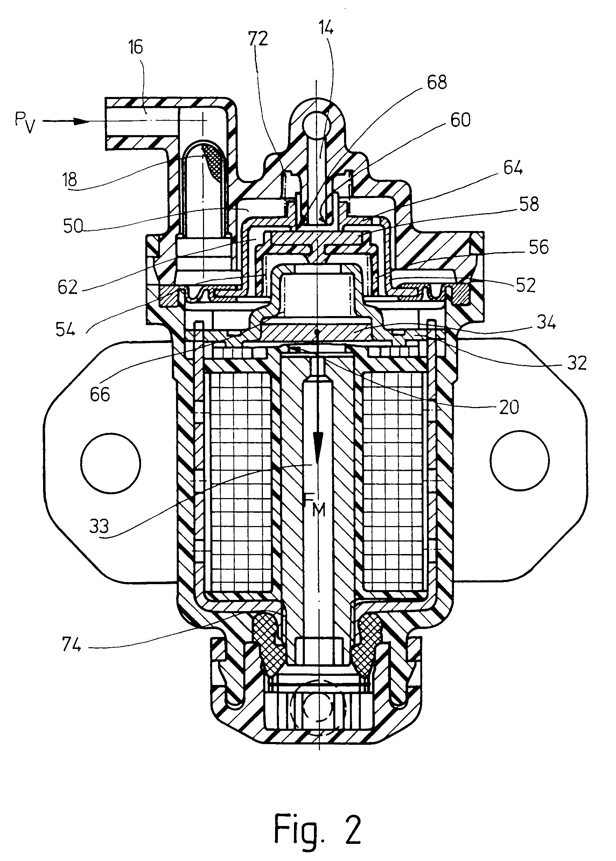

Figur 1 zeigt ein insgesamt mit dem Bezugszeichen 2 bezeichnetes proportional arbeitendes Magnetventil bei einem elektropneumatischen Druckwandler, der mit Gleichstrom, Wechselstrom oder pulsbreitenmoduliertem Strom arbeitet. Der Druckwandler umfaßt ein Unterteil 4 mit einem Stutzen 6 für die Bereitstellung des Umgebungsdruckes p_{ATM} und einen Filter 8 zur Luftreinigung; ein Mittelteil 10 und ein Oberteil 12 mit Stutzen 14 für den Anschluß an eine den Versorgungsunterdruck p_{U} bereitstellende Vorrichtung, sowie den in Figur 2 gezeigten Stutzen 16 mit Filter 18 für den Anschluß an einen Verbraucher p_{V}. Der elektrische Anschluß erfolgt an einem Anschlußstift 13.

Der Elektromagnet besteht aus einem Magnettopf 20, einem Spulenkörper 22, der einen Dichtsitz 24 bildenden Anschlag 26 aufweist, aus Wicklung 28, Magnetkern 30 und Joch 32.

Der Verbraucherunterdruck p_{V} wird dabei aus dem Versorgungsunterdruck p_{U} durch Zumischen von Umgebungsluft beziehungsweise Umgebungsdruck p_{ATM} erzeugt und liegt somit zwischen p_{U} und p_{ATM}.

Innerhalb des Magnetkerns 30 ist eine strömungsmäßig mit dem Stutzen 6 verbundene Längsöffnung 33 vorgesehen, die von dem Anschlag 26 begrenzt ist und von einer Ankerplatte 34 abdichtbar ist, indem die Ankerplatte 34 durch eine magnetische Anzugskraft Fₘ gegen den Anschlag 26 gezogen wird.

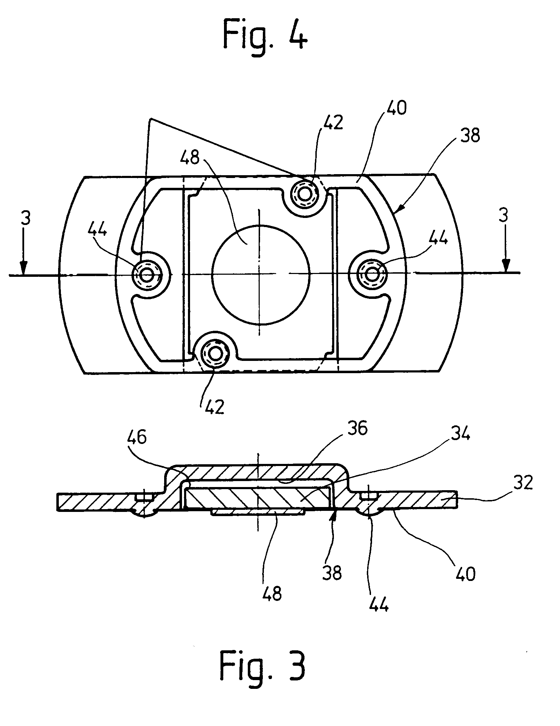

Der Ankerplattenbereich ist in den Figuren 3 und 4 im einzelnen dargestellt. Das Joch 32 bildet eine rückspringende Ausformung 36 aus, die der Form der Ankerplatte 34 entsprechend ausgebildet ist und in der die Ankerplatte 34 angeordnet ist. Die Ankerplatte 34 ist mittels eines Halteelements 38 in der Form eines Führungsrahmens 40 an der Jochplatte 32 gehalten, wobei die Ankerplatte 34 mittels Nieten 42 an dem Führungsrahmen 40 befestigt ist. Der Führungsrahmen 40 ist seinerseits mittels Nieten 44 an der Jochplatte 32 befestigt. Aufgrund der Biegeelastizität des Führungsrahmens 40 ist die Ankerplatte 34 in axialer Richtung derart verschiebbar, daß sie als Ventilglied gegen den Dichtsitz 24 anlegbar beziehungsweise von diesem abhebbar ist. Dabei ist die Ankerplatte 34 innerhalb der Ausformung 36 reibungsfrei verlagerbar; es kommt zu keinen Berührungen zwischen Ankerplatte 34 und den die Ausformung 36 bildenden Wandbereichen 46 des Jochs 32. Die Ankerplatte 34 umfaßt weiter an ihrer gegen den Dichtsitz 24 anlegbaren Seite eine Gummibeschichtung 48, wodurch ein geräuscharmes Öffnen und Verschließen der Öffnung 33 möglich ist.

Soll ein maximaler Verbraucherdruck p_{V} eingestellt werden, so wird ein maximaler Stellstrom I_{eff} gewählt. In diesem Fall wird die Ankerplatte 34 mit maximaler Anzugskraft Fₘ gegen den Dichtsitz 24 gezogen. Mittels der den Versorgungsunterdruck p_{U} bereitstellenden Vorrichtung wird über den Stutzen 14 ein Ringraum 50, der strömungsmäßig mit dem Verbraucherstutzen 16 verbunden ist, evakuiert, wobei der Druck in dem Ringraum 50 sinkt. Dadurch wird ein starrer Membranteller 52 angehoben, und aufgrund einer Feder 54 wird ein Topf 56 mit Gummidichtungseinsatz 58 angehoben, bis die Gummidichtung 58 einen von dem Stutzen 14 gebildeten Dichtsitz 60 verschließt. Sodann erfolgt ein weiterer Druckausgleich zwischen dem von dem starren Membranteller 52 umschlossenen Raum 62 und dem oberen Raum 50 über eine Bohrung 64. Nach Herstellung des Druckausgleichs zwischen den Räumen 62 und 50 senkt sich der starre Membranteller 52 und mit diesem der Topf 56 wieder nach unten. Hierdurch wird der Dichtsitz 60 freigegeben, was zu weiterer Evakuierung des Raumes 50 und zur Wiederholung der eben geschilderten Abläufe mit stufenweise abnehmendem Druck führt. Die Abläufe wiederholen sich solange, bis der Druck oberhalb der Ankerplatte 34 derart abgesunken ist, daß der von außen anliegende Umgebungsdruck p_{ATM} die Ankerplatte gegen den inneren Druck und eine Feder 66 anhebt und somit Umgebungsluft zu den Räumen 62 beziehungsweise 50 einströmen kann. Damit ist der maximal erreichbare Unterdruck und der diesem entsprechende Gleichgewichtszustand erreicht.

Soll der Verbraucherunterdruck p_{V} verringert werden, so wird der Steuerstrom I_{eff} reduziert. Die Abnahme der Anzugskraft Fₘ bewirkt, daß der von außen anliegende Umgebungsdruck P _{ATM} die Ankerplatte 34 von der Dichtkante 24 abhebt und Umgebungsluft einströmen kann. Die einströmende Luft drückt den starren Membranteller 52 nach oben, wodurch die Gummidichtung 58 des Topfes 56 gegen den Dichtsitz 60 gelegt wird und somit den Stutzen 14 verschließt. Über die Bohrung 64 ergibt sich eine Druckerhöhung im Raum 50 und somit eine Erhöhung des Verbraucherdrucks _{pV.} Bei einem sehr großen Überdruck im Raum 62 gegenüber dem Raum 50 kann der Druckausgleich nicht schnell genug über die Bohrung 64 erfolgen. Es öffnet sich zusätzlich ein Dichtsitz 68, der von einem ringförmigen Flansch 70 des starren Membrantellers 52 gebildet ist, wodurch eine Verbindung großen Querschnitts zwischen Raum 62 und Raum 50 erreicht ist. Der Dichtsitz 68 wird dadurch geöffnet, daß der Membranteller 52 aufgrund des erheblichen Überdrucks im Raum 62 gegen den Druck einer Feder 72 über die Anschlagsposition der Gummidichtung 58 an dem Dichtsitz 60 hinaus angehoben wird, wodurch sich der Flansch 70 von der Gummidichtung 58 abhebt. Auf diese Weise ist eine sehr schnelle Belüftung des Systems realisiert. Die Feder 72 bewirkt, daß der Dichtsitz 68 im druckausgeglichenen Zustand geöffnet bleibt.

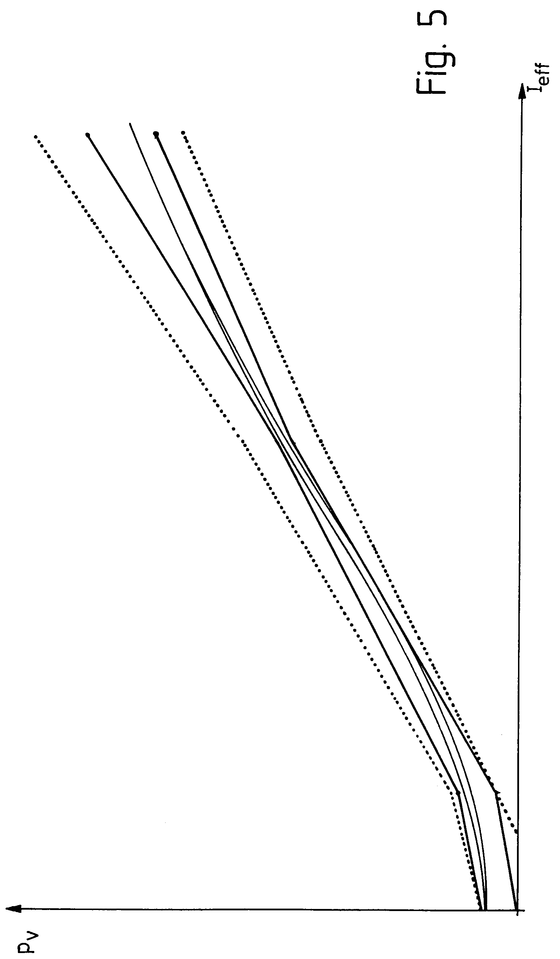

Beispielhaft sind in der Figur 5 Ausgangskennlinien eines vorstehend beschriebenen Druckwandlers gezeigt. Es ist der Verbraucherdruck _{pV} in Abhängigkeit vom Steuerstrom I_{eff} dargestellt. Zur Aufnahme der Ausgangskennlinien wurde das Magnetventil beziehungsweise der Druckwandler mehrere Male mit dem Steuerstrom I_{eff} beaufschlagt, wobei sich die Kennlinien innerhalb des gepunktet dargestellten Bereichs befinden. Die Steigung der Ausgangskennlinien kann dabei durch Drehung des Magnetkerns 30 in einem Gewinde 74 eingestellt werden, da sich dadurch der Abstand der Magnetkernoberkante zur Ankerplatte 34 und damit die wirksame Magnetkraft Fₘ verändert.

## Patentansprüche

1. Magnetventil, umfassend einen Spulenkörper, ein Joch und einen innerhalb einer rückspringenden Ausformung des Jochs gegen einen, einen Dichtsitz bildenden Anschlag verschiebbar geführten Anker, **dadurch gekennzeichnet**, daß der Anker (34) mittels eines biegeelastischen Halteelements (38) in einem Abstand von einem die Ausformung (36) des Jochs (32) bildenden Wandbereich (46) gehalten ist.

2. Magnetventil nach Anspruch 1, **dadurch gekennzeichnet**, daß der Anker (34) mittels des Halteelements (38) an dem Joch (32) gehalten ist.

3. Magnetventil nach Anspruch 1 oder 2, **dadurch gekennzeichnet**, daß das Halteelement (38) rahmenförmig ausgebildet ist und den plattenförmigen Anker (34) umgreift.

4. Magnetventil nach einem der vorstehenden Ansprüche, **dadurch gekennzeichnet**, daß auf der dem Dichtsitz (24) zugewandten Seite des Ankers (34) eine Gummibeschichtung (48) vorgesehen ist.

5. Magnetventil nach einem der vorstehenden Ansprüche, **dadurch gekennzeichnet**, daß das Halteelement (38) mit dem Anker (34) vernietet ist.

6. Magnetventil nach einem der vorstehenden Ansprüche, **dadurch gekennzeichnet**, daß das Halteelement (38) mit dem Joch (32) vernietet ist.
